# EUROPÄISCHE PATENTSCHRIFT

(11) **EP 1 644 223 B1**
(45) Veröffentlichungstag und Bekanntmachung des Hinweises auf die Patenterteilung: **29.11.2006**
(21) Anmeldenummer: 04734676.2
(22) Anmeldetag: 25.05.2004
(51) Int. Cl.: B60R 21/16

(54) **VERFAHREN ZUR HERSTELLUNG EINES LUFTSACKS**
METHOD FOR PRODUCING AN AIRBAG
PROCEDE POUR PRODUIRE UN AIRBAG

(30) Priorität: 13.06.2003 DE 10326757
(43) Veröffentlichungstag der Anmeldung: 12.04.2006
(73) Patentinhaber: BST Safety Textiles GmbH, 79689 Maulburg (DE)
(72) Erfinder: TRÖNDLE, Birgit, 79774 Albbruck (DE); ESCHBACH, Thomas, 79790 Rheinheim (DE); BECKER, Michael, 79669 Zell im Wiesental (DE)
(74) Vertreter: Fischer, Matthias
(86) Internationale Anmeldenummer: PCT/EP2004/005607
(87) Internationale Veröffentlichungsnummer: WO 2004/110824

(56) Entgegenhaltungen:
- DE-A- 3 903 216
- DE-A- 19 852 232
- US-A- 5 707 711
- US-A1- 2001 030 416
- US-A1- 2002 038 950

## Beschreibung

Die vorliegende Erfindung betrifft einen, insbesondere in einem Stück gewebten (OPW) Luftsack mit einlagigen und zweilagigen Bereichen, mit einer oberen und einer unteren äußeren Oberfläche, mit einer wenigstens bereichsweise aufgebrachten Auflage.

Es sind in einem Stück gewebte Luftsäcke, sogenannte One-Piece-Woven oder OPW-Luftsäkke bekannt, die ein- und mehrlagige Bereiche aufweisen und auf deren äußere obere und untere Oberfläche eine Auflage, zum Beispiel eine Folie, aufgebracht ist. Die Folie dient dem Zweck, ein Entweichen eines Fluides oder Gases aus den im mehrlagigen Bereich zwischen den Lagen gebildeten Kammern zu vermeiden. Obwohl die eingesetzten Auflagen eine nahezu vollständige Impermeabilität aufweisen, sind die eben beschriebenen Luftsäcke nicht ausreichend dicht. Infolgedessen können die heute von der Industrie geforderten Standzeiten von Luftsäcken bzw. Airbags, insbesondere Seiten- oder Kopfairbags nur schwer erreicht werden oder nur durch sehr kostenintensive Generatoren, die beispielsweise durch mehrere Stufen das entwichene Gas nachfordern oder durch eine größere Menge Treibmittel, welche den Gasverlust ausgleichen, kompensiert werden. Daneben haben die eben beschriebenen Luftsäcke den Nachteil, daß durch Leckagen Gas in den Innenraum eines Kraftfahrzeugs gelangen kann, in dem ein derartiger Luftsack eingesetzt ist, was zu Gesundheitsschäden durch das Gas an sich oder dessen hohe Temperatur führen kann.

Der Erfindung liegt die Aufgabe zugrunde, einen Luftsack vorzuschlagen, mit dem die aus dem Stand der Technik bekannten Nachteile vermieden oder zumindest stark verringert werden.

Aus der US 2001/0030416 A1 ist eine Airbagvorriohtung mit einem mit einlagigen und zweilagigen Bereichen ausgebildeten doppelt gewebten Airbag mit einer wenigstens bereichsweise aufgebrachten Auflage bekannt.

Die US 5,707,711 beschreibt einen Airbag mit einlagigen und zweilagigen Bereichen mit äußeren Oberflächen mit wenigstens bereichsweise aufgebrachter Polymerbeschichtung.

Die Aufgabe wird gelöst mit einem Luftsack gemäß Anspruch 1. Es hat sich überraschenderweise gezeigt, daß die Undichtigkeit der Luftsäcke durch eine Gasdurchlässigkeit des einlagigen Gewebes, welches den Luftsack am Rand in einer nahtähnlichen Verbindung umsäumt, verursacht wird. Hierbei entweicht das Gas aus den Kammern des Luftsacks durch den einlagigen Bereich und zwar in der Gewebeebene, welche zwischen den Auflagen der oberen und der unteren äußeren Oberfläche liegt. Das der Erfindung zugrunde liegende Problem ist mit einer Abdichtung der einlagigen Bereiche, so daß sie für Fluide impermeabel sind, optimal gelöst.

In der vorteilhaften Ausbildung des erfindungsgemäßen Luftsacks sind die einlagigen Bereiche, wenigstens teilweise, mit einer gegenüber dem übrigen Gewebe bindungstechnisch loseren Gewebekonstruktion versehen. Hierdurch läßt sich beim Aufbringen einer Auflage, zum Beispiel einer Folie oder eines Laminats, diese/dieses tiefer in das losere Gewebe des einlagigen Bereichs hineinbringen und dies in einer vorteilhaften Weiterbildung so tief, daß sich im Inneren des einlagigen Bereichs die Auflagen berühren und damit einen "horizontalen" Abschluß bilden, welcher die einlagigen Bereiche in der Gewebeebene versiegelt. Damit ist ein Entweichen eines Aufblasgases aus durch die zweilagigen Bereiche gebildeten Kammern praktisch unmöglich.

Einen ähnlichen Vorteil hat eine andere Weiterbildung der Erfindung, bei der eine Auflage mit niedriger Viskosität aufgebracht wird. Hierdurch ist in ähnlicher Weise wie beim eben beschriebenen Verfahren ein sehr tiefes Eindringen der Auflage in das Gewebe im einlagigen Bereich erreichbar, so daß eine vollständige Abdichtung mit denselben eben beschriebenen Vorteilen realisiert werden kann.

Eine ebenso vorteilhafte Weiterbildung der Erfindung ergibt sich durch ein Verfahren gemäß Anspruch 3, bei dem die einlagigen Bereiche thermisch versiegelt werden. So kann hier am äußersten Rand eines Luftsacks durch Erhitzen des Randbereiches ein Verschmelzen der oberen mit der unteren Auflage erreicht werden, so daß auch hierdurch ein im wesentlichen vollständiger Abschluß bzw. eine vollständige Abdichtung des einlagigen Bereichs erreicht werden kann.

Zum besseren Verständnis der Erfindung wird diese anhand einer Zeichnung in beispielhafter Weise kurz beschrieben.
- Figur 1: zeigt stark schematisiert einen Ausschnitt eines Luftsacks aus dem Stand der Technik, mit einem einlagigen Bereich, an den sich ein zweilagiger Bereich anschließt, aus dem ein unter Druck stehendes Gas entweichen kann.
- Figur 2: zeigt, ähnlich wie Figur 1, einen Ausschnitt eines Luftsacks, jedoch mit einer Abdichtung nach Durchführung des erfindungsgemäßen Verfahrens.

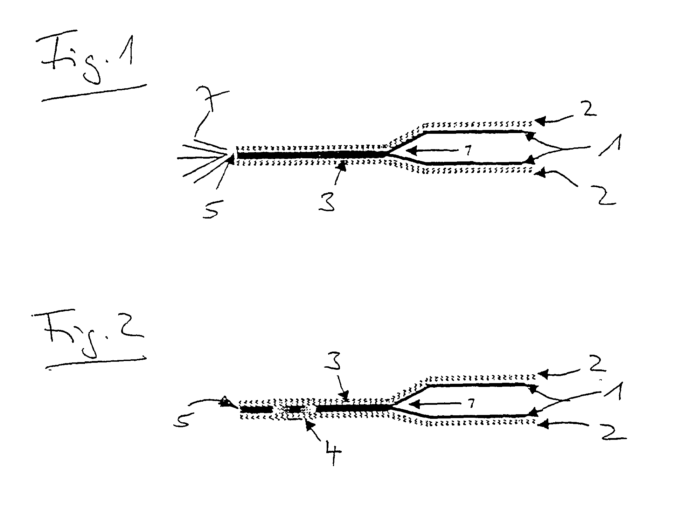

Figur 1 zeigt auf der linken Seite einen einlagigen Bereich 3, der in der Mitte der Figur in einen zweilagigen Bereich 1 übergeht. Auf beiden äußeren Außenflächen im zweilagigen Bereich 1 ist jeweils eine Auflage 2, beispielsweise in Form einer Beschichtung oder Folie aufgebracht dargestellt, die das Gewebe so abdichten soll, daß kein Gas über die Oberflächen des Luftsacks entweichen kann. Im in Figur 1 dargestellten Beispiel kann jedoch das unter Druck stehende Gas 7 durch die einlagige Gewebestruktur 3 in der Gewebeebene (in Fig. 1 nach links) wandern und an der Stelle 5 austreten.

In dem in Figur 2 dargestellten einlagigen Bereich 3 ist bereichsweise eine beispielsweise bindungstechnisch losere Gewebekonstruktion 4 eingearbeitet Diese lose Gewebekonstruktion 4 macht es möglich, daß die Auflage 2 gegenüber den dichteren Konstruktionsbereichen 1, 3 tiefer in das Gewebe eindringen kann. Das kann derart durchgeführt werden, daß sich die beiden aufgebrachten Auflagen in der Gewebemitte des einlagigen Bereichs 3 der loseren Konstruktion 4 treffen und diesen Bereich versiegeln. Dadurch wird das unter Druck stehende Gas 7 daran gehindert, durch den einlagigen Bereich 3 zu wandern und an der Stelle 5 aus dem Luftsack auszutreten.

Den gleichen Effekt erreicht man dadurch, daß man erfindungsgemäß eine Auflage mit geringerer Viskosität einsetzt, die tiefer in das einlagige Gewebe eindringen kann und eine Versiegelung des einlagigen Gewebes schafft.

Durch ein thermisches Versiegeln des einlagigen Bereiches etwa an der Stelle 5 gemäß den Figuren 1 und 2, wobei die Auflagen 2 der oberen und der unteren Gewebelage miteinander verbunden werden, ist ebenfalls ein Versiegeln des einlagigen Bereichs möglich und damit eine optimale Abdichtung des Airbags zu erreichen.

Mit Durchführung des erfindungsgemäßen Verfahrens wird ein wesentlich besserer Airbag erreicht, der eine wesentlich höhere Dichtigkeit gewährleistet. Damit lassen sich die geforderten hohen Standzeiten sehr leicht erreichen, da die Menge des durch Leckagen entweichenden Gases wesentlich reduziert wird.

## Patentansprüche

1. In einem Strick gewebter (OPW) Luftsack mit einlagigen und zweilagigen Bereichen, mit einer oberen und einer unteren äußeren Oberfläche mit einer wenigstens bereichsweise aufgebrachten Auflage, wobei einlagige Bereiche in der Gewebeebene derart abgedichtet sind, dass sie für Fluide im Wesentlichen impermeabel sind, wobei einlagige Bereiche wenigstens teilweise, mit dichteren Gewebekonstuktionsbereichen (1, 3) und mit einer gegenüber dem übrigen Gewebe bindungstechnisch loseren Gewebekonstruktion (4) versehen sind und dass die Auflagen auf der oberen und unteren äußeren Oberfläche bei der bindungstechnisch loseren Gewebekonstruktion gegenüber den dichteren Gewebekonstruktionsbereichen (1, 3) tiefer in das Gewebe eindringen, **dadurch gekennzeichnet, dass** die Auflagen so tief in das losere Gewebe eingebracht sind, dass sich im Inneren des einlagigen Bereichs die Auflagen berühren.

2. Luftsack nach Anspruch 1, **dadurch gekennzeichnet, dass** er mit Auflagen mit niedriger Viskosität versehen ist.

3. Luftsack nach Anspruch 1 oder 2, **dadurch gekennzeichnet, dass** die einlagigen Bereiche thermisch versiegelt sind.

## Claims

1. A one-piece woven (OPW) air bag comprising single-layer and two-layer portions, an upper and a lower outer surface with a coating applied at least portionally, said single-layer portions being sealed in the plane of the woven such that they are substantially impermeable to fluids, said single-layer portions being provided at least in part with denser woven structure portions (1, 3) and with a looser woven structure (4) as compared to the remaining woven, and that said coatings on said upper and a lower outer surface penetrate deeper into the woven of said looser woven structure as compared to said denser woven structure portions (1.3), **characterized in that** said coatings penetrate so deeply into said looser woven that they come into contact with each other in the interior of said single-layer portion.

2. The air bag as set forth in claim 1, **characterized in that** it is provided with coatings of low viscosity.

3. The air bag as set forth in claim 1 or 2, **characterized in that** said single-layer portions are thermally sealed.

## Revendications

1. Airbag tissé d'une pièce (OPW) présentant des zones à une couche et à deux couches, comportant une surface extérieure supérieure et inférieure présentant un revêtement appliqué au moins par zones, les zones à une couche étant rendues étanches dans le plan du tissu de manière à être substantiellement imperméables aux fluides, les zones à une couche étant pourvues au moins partiellement de zones de construction de tissu plus denses (1, 3) et d'une construction de tissu plus lâche (4) du point de vue de l'armure par rapport au tissu restant et les revêtements sur la surface extérieure supérieure et inférieure dans la construction de tissu plus lâche du point de vue de l'armure pénétrant plus profondément dans le tissu par rapport aux zones de construction de tissu plus denses (1, 3), **caractérisé en ce que** les revêtements sont intégrés dans le tissu plus lâche si profondément que les revêtements se touchent à l'intérieur de la zone à une couche.

2. Airbag selon la revendication 1, **caractérisé en ce qu'**il est pourvu de revêtements à viscosité faible.

3. Airbag selon les revendications 1 ou 2, **caractérisé en ce que** les zones à une couche sont scellées thermiquement.
